# EUROPEAN PATENT APPLICATION

(11) **EP 1 955 583 A1**
(43) Date of publication of application: **13.08.2008**
(21) Application number: 08380035.9
(22) Date of filing: 12.02.2008
(51) Int. Cl.: A01D 90/10, A01D 90/14, A01D 46/00

(54) **Distributing trailer**

(30) Priority: 12.02.2007 ES 200700376
(71) Applicant: Marrodan y Rezola, S.A., 26001 Logroño (ES)
(72) Inventor: Milazo Estefania, Rafael c/o MARRODAN Y REZOL, S.A., 26001 - LOGRONO La Rioja (ES)
(74) Representative: Carvajal y Urquijo, Isabel

(57) **Abstract**

The invention relates to a distributing trailer especially conceived for transporting the grape harvest from the vineyard to the winery and for automatically depositing its load on the selection table of the winery or other alternative receiving elements in a controlled and balanced manner; it incorporates a hopper (8) with an isosceles trapezium-shaped profile, converging towards a lower opening (9) immediately above which a pair of shafts (11) with radial and helical blades (12) are located, which blades act as to block said exit opening, controlling the discharge by means of the rotation speed of said duly motor-driven shafts (11). A profusely perforated polypropylene conveyor belt (10) is located under the opening (9), which belt runs longitudinally along the base of the hopper and is housed in a tray (21), further acting as a support of the belt, such that while the grapes head towards one end of said tray, in which an exit (22) for the grapes is located, the grape juice mostly traverses the conveyor belt through the holes thereof in order to head towards an independent exit (23).

## Description

### Object of the Invention

The present invention relates to a distributing trailer which has been especially designed to be used as transport means between the vineyards of a winery and the winery itself; said trailer being further qualified to be self-emptied at the destination site of the grapes.

The object of the invention is to achieve that the trailer is able to self-unload in a slow and metered manner, so that the grapes arrive in optimal conditions at the selection table or other alternative receiving elements for this load on which the grapes have to be unloaded.

The invention is thus located in the field of agricultural machinery, and more specifically in the field of transport means for transporting the grapes to the corresponding winery, being of particular interest in preparing high quality wines.

### Background of the Invention

In the preferred scope of practical application of the invention, that of preparing high quality wines, the grape harvest is loaded on the trailers which take it to the winery, where said trailers must be unloaded in a slow and controlled manner with a suitable distribution of the grapes on the selection table, so that said selection is carried out in optimal conditions and is efficient.

Spanish patent ES 2252640 discloses a tilting skip with a vibrating chute for the mentioned purpose, in which the actual skip is assembled in a tilting manner on a raising mechanism allowing said skip to adopt the height necessary for the unloading, said skip having at one of its ends, the end closest to its tilt shaft, an extension acting as a chute element aided by a chute based on two unbalanced electric motors such that at least from the theoretical point of view, a progressive increase in the inclination of the skip, in parallel with the vibrating effect thereof, causes a metered unloading of the grapes.

This solution in practice has a drawback in two aspects:
- On one hand the grapes are not always evenly distributed since even by suitably programming the operation of the tilting means of the skip, normally a hydraulic cylinder, when a grape unloading flow above a certain limit is attempted to be achieved, the skip reaches an inclination level making sudden unloading of all or a good part of its contents frequent, the grapes massively reaching the element placed afterwards for the reception.
- On the other hand and since its operation is based on a vibrating system, the latter affects all the mechanisms and linkages of the trailer, shortening the useful life thereof.

### Description of the Invention

The distributing trailer proposed by the invention fully and satisfactorily solves the drawbacks previously set forth, ensuring a perfectly homogeneous and controlled unloading of the product contained therein and eliminating the problem of the vibrations insofar as said trailer does not base its unloading on this system as will be seen below.

To that end and more specifically the proposed trailer, provided with the classic and inevitable rolling frame, with its pole for coupling to a tractor vehicle, incorporates a chassis which can be raised, for example by means of scissor type mechanisms with the collaboration of an actuator element such as a hydraulic cylinder, said chassis supporting a hopper for loading the product, which hopper unloads at the lower part on a conveyor belt channeling the product towards an outlet located in correspondence with one of the ends of said belt.

According to one of the essential features of the invention, on the bottom of the mentioned hopper two parallel shafts are provided located on an imaginary horizontal plane and provided with respective blades by way of propellers, such that the latter mostly block the exit of the hopper and, rotating in the opposite direction by means of a suitable drive element, allow precisely and constantly controlling the amount of grapes which manage to pass from the hopper to the conveyor belt.

For the mobility of the mentioned shaft-blade assemblies it has been provided that said shafts are connected to one another by means of suitably meshed gear rings transmitting the movement from one to the other, one of these shafts having a set or pawl, such that, actuated by a hydraulic or pneumatic cylinder, said shaft rotates in a controlled and intermittent manner, driving the other shaft and the respective blades in turn driving the grapes towards the conveyor belt in a metered manner.

According to another feature of the invention, this conveyor belt is formed as a profusely perforated polypropylene band, such that while the grapes are driven by the belt, the grape juice traverses it falling to a lower tray, and also such that while the grapes exit in a metered manner through the corresponding outlet, the grape juice exits independently through its own exit, preferably opposite to the previous outlet.

As deduced from that previously set forth and since the passage of the grapes from the hopper or skip of the trailer to the lower unloading area thereof is perfectly regulated, the metering of the grapes for their access to the selection table is perfectly constant over time and in turn can be programmed according to the working speed of the actuator element.

Given that the propylene belt has a high rigidity, it has been provided that the mobilization thereof is carried out with the collaboration of gear wheels that are suitably keyed, or by means of a shaft with a square section, to its drive and return shafts, using the actual holes of the belt to drive it, which involves as a complementary advantage that the actual teeth of the wheels act as cleaners of the holes at the end of each phase of use of the trailer, preventing the deposition and solidification thereon of the grape juice sugars, which would tend to obstruct it.

### Description of the Drawings

To complement the description being made and for the purpose of aiding to better understand the features of the invention according to a preferred practical embodiment thereof, a set of drawings is attached as an integral part of said description, in which the following has been shown with an illustrative and non-limiting character:
Figure 1 shows a schematic side elevational view of a distributing trailer carried out according to the object of the present invention.
Figure 2 shows a front elevational view of the same trailer, the rolling frame and the raising means of the hopper of which have been eliminated for the sake of simplicity.
Figure 3 finally shows a cross-sectional detail of the same trailer according to section line A-A of Figure 1.

### Preferred Embodiment of the Invention

In view of the indicated figures, it can be observed how the distributing trailer proposed by the invention is formed from a frame (1), preferably provided with a rolling shaft (2), and in any case provided with a pole (3) for pulling it by means of a tractor vehicle, a scissor type raising system (4) being located on said frame (1), which system is aided by a cylinder (5) for raising a chassis (6) considerably maintaining a horizontal position, and which with the collaboration of side legs (7) supports a hopper (8) with a suitable capacity.

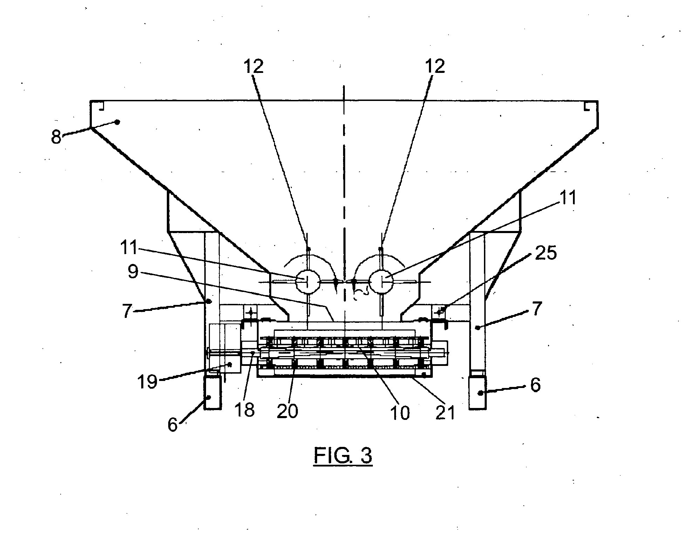

This hopper (8), preferably with an inverted isosceles trapezium-shaped profile, as shown in Figure 3, unloads through a longitudinal lower opening (9) onto a conveyor belt (10) running along the hopper (8) longitudinally and at the lower part.

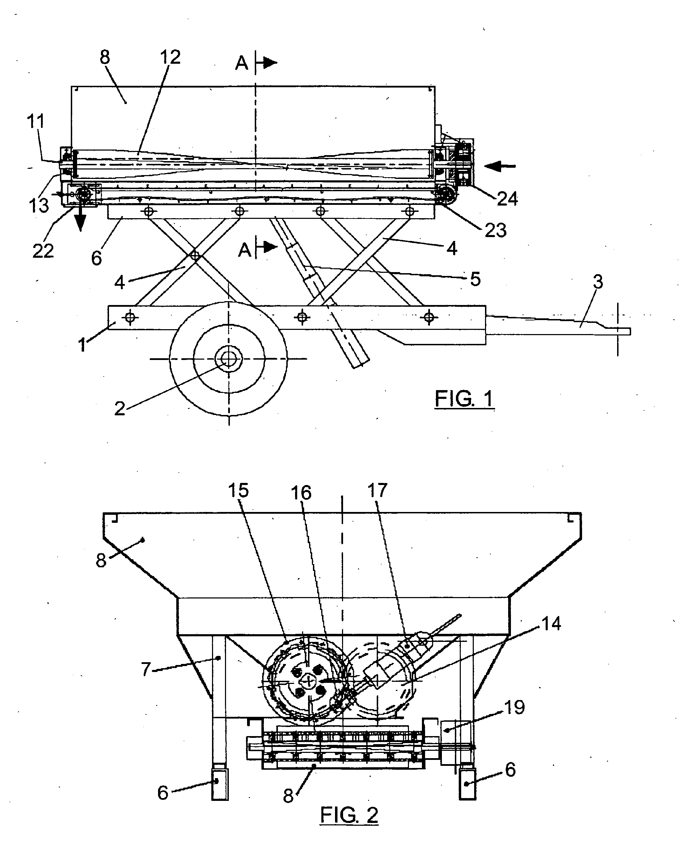

A pair of parallel horizontal shafts (11) are located immediately above said opening (9), or in other words above the conveyor belt (10), each of which shafts is provided with radial blades (12) with a slightly winding path, as shown in Figure 1, such that said blades mostly block the exit of the hopper (8), controlling the output discharge according to their own movement.

To that end the shafts (11), provided on respective end bearings (13), are connected to one another by means of respective gear rings (14) meshing with one another, and a set (15) is integral with one of said shafts (11), which set acts by way of a pawl provided with a bolt (16) on which a hydraulic or pneumatic cylinder (17) in turn acts, such that in one movement direction of the piston of said cylinder (17) the set (15) angularly drives the corresponding shaft (11), providing it with an angular movement of a specific amplitude, whereas in its movement in the opposite direction the cylinder (17) is inoperative.

Returning again to the conveyor belt (10), it is made of a profusely perforated polypropylene belt, assembled on a pair of transverse end shafts (18), one of which is aided by the corresponding motor (19) for the mobilization of the belt. As is observed in any of Figures 2 and 3, this shaft (18) is provided with a plurality of evenly distributed gear wheels (20), the teeth of which mesh in the holes of the polypropylene belt (10), ensuring a correct drive thereof and substantially increasing the effective diameter of such shafts.

The conveyor belt (10) is housed and supported by a tray (21) conveniently fixed to the chassis (6) by means of anchors (25), such that this tray essentially collects the grape juice traversing the holes of the polypropylene belt (10), at the same time that it collects the grapes driven by said belt towards the outlet (22) provided at the bottom of the tray and of one of the ends thereof, as can be seen in Figure 1, in which said exit has been schematically depicted with an arrow, an exit (23) for the grape juice being located at the other end of the tray.

Finally, it only remains to point out that the drive system of the shafts (11) is duly protected by a guard (24) especially visible in Figure 1.

The tray (21) must logically have suitable rigidity as it forms the physical support for the conveyor belt (10) and its fittings.

## Claims

1. A distributing trailer especially conceived for gathering the grape harvest, of the type having a rolling frame provided with a pole for pulling it by means of a tractor vehicle, on which frame there is provided a raising system for a chassis in turn supporting a hopper or container of the trailer, **characterized in that** said hopper has a lower unloading opening (9) along its entire length, towards which the side walls thereof converge, a pair of parallel and horizontal shafts (11) being located immediately above said exit opening, which shafts are provided with respective blades (12) mostly blocking said opening and aided by drive means such that the mobility thereof determines the unloading discharge of the hopper (8), whereas a conveyor belt (10) which is housed on a tray (21) collecting both the grapes and the grape juice is located below said opening (9), which tray is provided at one of its ends with an outlet (22) for the grapes, and at its opposite end with an exit (23) for the grape juice.

2. A distributing trailer according to claim 1, **characterized in that** the shafts (11) located next to the exit opening (9) of the hopper (8) are connected to one another by means of gear rings (14) directly meshing with one another, one of said shafts (11) further having a plate (15) forming a set or pawl actuated by a hydraulic or pneumatic cylinder (17) providing through said set an intermittent and controlled movement to both shafts (11), with rotation in the opposite direction.

3. A distributing trailer according to the previous claims, **characterized in that** the blades (12) associated to the shafts (11) have a considerably helical path.

4. A distributing trailer according to claim 1, **characterized in that** the conveyor belt (10) is made of a considerably rigid profusely perforated polypropylene belt, gear wheels that are keyed both to the drive shaft (18) and to the return shaft of the belt meshing in part of such perforations.

5. A distributing trailer according to the previous claims, **characterized in that** the hopper (8) is assembled on the chassis (6) through side legs (17), said chassis (6) forming the support means both for the hopper and for the conveyor belt, it having been provided that the tray (21) enclosing said conveyor belt is rigid enough to support both the conveyor belt (10) and its fittings.
